# EUROPEAN PATENT APPLICATION

(11) **EP 4 542 541 A1**
(43) Date of publication of application: **23.04.2025**
(21) Application number: 23868373.4
(22) Date of filing: 31.07.2023
(51) Int. Cl.: G10L 13/08, G10L 25/90, G10L 17/02, G10L 25/63, H04N 21/488, G06N 3/08

(54) **ELECTRONIC DEVICE AND AUDIO TRACK OBTAINING METHOD THEREFOR**

(30) Priority: 21.09.2022 KR 20220119320
(71) Applicant: Samsung Electronics Co., Ltd., Suwon-si, Gyeonggi-do 16677 (KR)
(72) Inventor: DEGTYARENKO, Illya, Kyiv, 01032 (UA); TKACH, Nazarii, Kyiv, 01032 (UA); SELIUK, Kostiantyn, Kyiv, 01032 (UA); IVANOV, Oleksandr, Kyiv, 01032 (UA); SIELIKHOV, Valerii, Kyiv, 01032 (UA)
(74) Representative: Appleyard Lees IP LLP
(86) International application number: PCT/KR2023/011099
(87) International publication number: WO 2024/063313

(57) **Abstract**

An electronic device includes: a display; a speaker; memory storing one or more instructions; and one or more processors operatively coupled to the display, the speaker, and the memory, and configured to execute the one or more instructions, wherein the one or more instructions, when executed by the one or more processors, cause the electronic device to: control the display to display video data including subtitle data in a target language; obtain context information of an utterer from the video data and audio data corresponding to the video data; obtain audio track data corresponding to the target language based on the subtitle data and the context information of the utterer; and control the speaker to output the obtained audio track data.

## Description

### [TECHNICAL FIELD]

The disclosure relates to an electronic device and an audio track obtaining method and more particularly, to an electronic device that obtains an audio track based on subtitle data and an audio track obtaining method therefor.

### [BACKGROUND ART]

Due to the development of electronic technologies, various types of electronic devices have been developed and distributed. In particular, the distribution of a display device such as a TV or a smart phone actively proceeds.

According to a study, in 2023, a moving image occupies 82% or more of all consumer Internet traffics, and there is higher possibility that 80% of users would watch an entire video if a subtitle/closed caption is provided. The subtitle is key to reaching more users and may take an important role in image proximity. Having subtitles on moving image increases audience participation, improves user satisfaction, and gives users a choice in how he or she watches the moving image. According to a report of the Verizon, 50% or more of people prefer the caption, and 80% of the users are more likely to watch the entire video when they are provided subtitles. As dependence on subtitles increases, it is expected that a scale of the world wide subtitle and subtitle solution market will grow up from $263.4 million in 2019 to $350.1 million in 2025 at 7.4% of a compound annual growth (CAGR).

As such, the need for a translation function with respect to a video stream is increasing. Localization of a video content is the process for adapting a marketing content to a foreign market and subtitles are the easiest method for localizing a video in general.

An audio track that provides subtitles as a voice makes it possible for a user to easily watch the video content compared to subtitles and may help visually impaired people to watch a movie/TV content with subtitles. However, the number of available audio track options is much fewer than the number of available subtitle languages in general.

### [DISCLOSURE]

### [TECHNICAL SOLUTION]

According to an aspect of the disclosure, an electronic device includes: a display; a speaker; memory storing one or more instructions; and one or more processors operatively coupled to the display, the speaker, and the memory, and configured to execute the one or more instructions, wherein the one or more instructions, when executed by the one or more processors, cause the electronic device to: control the display to display video data including subtitle data in a target language; obtain context information of an utterer from the video data and audio data corresponding to the video data; obtain audio track data corresponding to the target language based on the subtitle data and the context information of the utterer; and control the speaker to output the obtained audio track data.

The one or more instructions, when executed by the one or more processors, may cause the electronic device to input the subtitle data and the context information of the utterer into a trained Artificial Intelligence (AI) model to obtain the audio track data, and the trained AI model may be a Text-to-Speech (TTS) AI model trained to receive text data as an input and convert the text data to speaker adaptive audio data based on the context information of the utterer.

The trained AI model may be configured to obtain a characteristic parameter of the utterer based on the context information of the utterer, and output the audio track data in which the subtitle data is converted to the speaker adaptive audio data based on the characteristic parameter of the utterer.

The one or more instructions, when executed by the one or more processors, may cause the electronic device to identify the characteristic parameter of the utterer based on the context information of the utterer and convert the subtitle data to the speaker adaptive audio data based on the characteristic parameter of the utterer to obtain the audio track data.

The characteristic parameter of the utterer may include at least one of a voice type, a voice intonation, a voice pitch, a voice speech speed, or a voice volume, and the context information of the utterer may include at least one of gender information, age information, emotion information, character information, or speech volume information of the utterer.

The one or more instructions, when executed by the one or more processors, may cause the electronic device to: obtain, based on at least one of the video data or the audio data, timing data related to a speech start of the utterer, identification data of the utterer, and emotion data of the utterer, and identify the characteristic parameter of the utterer based on the timing data, the identification data, and the emotion data.

The one or more instructions, when executed by the one or more processors, may cause the electronic device to: obtain the subtitle data streaming from a specific data channel, or obtain the subtitle data through text recognition with respect to frames included in the video data.

The one or more instructions, when executed by the one or more processors, may cause the electronic device to: separate the audio data corresponding to the video data into background audio data and speech audio data, obtain the context information of the utterer from the speech audio data, and control the speaker to mix the audio track data and the background audio data obtained based on the subtitle data and the context information of the utterer, and output the mixed audio track data and background audio data.

The one or more instructions, when executed by the one or more processors, may cause the electronic device to: based on the video data including a first utterer and a second utterer, obtain first timing data related to a speech start of the first utterer and second timing data related to a speech start of the second utterer, perform Text-to-Speech (TTS) conversion on first subtitle data corresponding to the first utterer based on the first timing data, first identification data of the first utterer, and first emotion data of the first utterer, to obtain first audio track data corresponding to the first utterer; and perform TTS conversion on second subtitle data corresponding to the second utterer based on the second timing data, second identification data of the second utterer, and second emotion data of the second utterer, to obtain second audio track data corresponding to the second utterer.

According to an aspect of the disclosure, a method performed by an electronic device for obtaining an audio track, includes: displaying, via a display of the electronic device, video data including subtitle data in a target language; obtaining context information of an utterer from the video data and audio data corresponding to the video data; obtaining audio track data corresponding to the target language based on the subtitle data and the context information of the utterer; and outputting, via a speaker of the electronic device, the obtained audio track data.

According to an aspect of the disclosure, a non-transitory computer readable medium having instructions stored therein, which when executed by a processor of an electronic device, cause the electronic device to: display, via a display of the electronic device, video data including subtitle data in a target language; obtain context information of an utterer from the video data and audio data corresponding to the video data; obtain audio track data corresponding to the target language based on the subtitle data and the context information of the utterer; and output, via a speaker of the electronic device, the obtained audio track data.

### [DESCRIPTION OF DRAWINGS]

FIG. 1 is a view for illustrating one or more embodiments of an electronic device according to one or more embodiments;
FIG. 2A is a block diagram illustrating a configuration of an electronic device according to one or more embodiments;
FIG. 2B is a view illustrating a detailed configuration of an example of an electronic device according to one or more embodiments;
FIG. 3 is a view illustrating an audio track obtaining method according to one or more embodiments;
FIG. 4 is a view illustrating an audio track obtaining method according to one or more embodiments;
FIG. 5 is a view specifically illustrating the audio track obtaining method shown in FIG. 4;
FIGS. 6A and 6B are views illustrating a method of capturing a screen to obtain subtitle text data according to one or more embodiments;
FIG. 7 is a view illustrating an audio track obtaining method according to one or more embodiments;
FIG. 8 is a view illustrating an implemented form of a TTS module according to one or more embodiments;
FIG. 9 is a view illustrating an identification data obtaining method of an utterer according to one or more embodiments;
FIG. 10 is views illustrating an emotion data obtaining method of an utterer according to one or more embodiments;
FIGS. 11A to 11D are views illustrating an example of obtaining context information of an utterer according one or more embodiments;
FIGS. 12 to 14 are views illustrating a use case according one or more embodiments; and
FIG. 15 is a view illustrating an infringement uncovering method according to one or more embodiments.

### [MODE FOR INVENTION]

Example embodiments of the disclosure will be described with reference to the appended drawings hereinafter.

The term used in the specification is briefly described and then the disclosure is specifically described.

The terms used in embodiments of the disclosure are selected as general terms which are widely used as much as possible in consideration of functions in the disclosure but may be varied depending on intention of those skilled in the art or a precedent, appearance of new technologies, or the like. In one or more examples, there is a term which is arbitrarily selected by the applicant in a certain case and in this case, its meaning will be specifically described in the relevant description part of the disclosure. Therefore, the term used in the disclosure should be defined based on the meaning of the term and the entire content throughout the disclosure rather than the simple name of the term.

In the specification, the expression such as "have", "may have", "include", or "may include" denotes the existence of such a characteristic (e.g. a numerical value, a function, an operation, and a component such as a part) and does not exclude the existence of additional characteristics.

The expression "at least one of A and/or B" should be interpreted to mean any one of "A" or "B" or "A and B".

The expression "1st", "2nd", "first", "second", or the like used in the specification may be used to describe various elements regardless of any order and/or degree of importance, wherein such expression is used only to distinguish one element from another element and is not intended to limit the relevant element.

The description that one element (e.g. a first component) is "(operatively or communicatively) coupled with/to" or "connected to" another element (e.g. a second component) should be interpreted such that the one element may be directly coupled to the another element or the one element may be coupled to the another element through the other element (e.g. a third component).

A singular expression includes a plural expression, unless obviously differently defined in the context. In the application, the term such as "include" or "consist of' should be construed as designating that there are such characteristics, numbers, steps, operations, components, parts, or a combination thereof described in the specification but not as excluding in advance possibility of the existence or addition of one or more other characteristics, numbers, steps, operations, components, parts, or a combination thereof.

In the disclosure, "module" or "part" may perform at least one function or operation and may be implemented as hardware or software, or as a combination of hardware and software. In one or more examples, a plurality of "modules" or "parts" may be integrated into at least one module and implemented as at least one processor (not shown), excluding a "module" or a "part" that needs to be implemented as specific hardware.

Hereinafter, one or more embodiments of the disclosure is more specifically described with reference to the appended drawings.

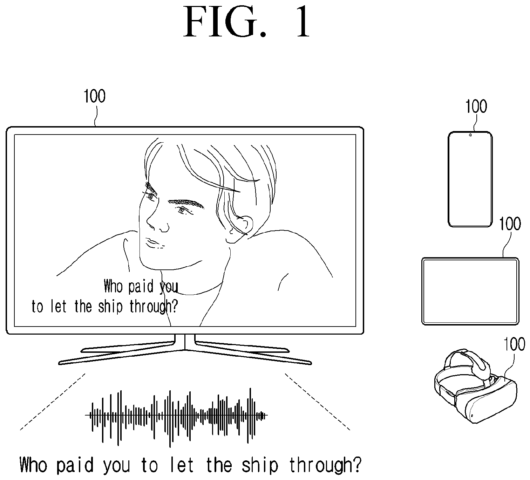

FIG. 1 is a view for illustrating one or more embodiments of an electronic device according to one or more embodiments.

An electronic device 100 may be implemented as an augment reality (AR)/virtual reality (VR) device or the like such as a television (TV), a smart phone, a tablet personal computer (PC), or a Head Mounted Display (HMD) as shown in FIG. 1 but is not limited thereto, wherein it may be applied to any device having a display function such as a laptop PC, a video wall, a large format display (LFD), Digital Signage, a Digital Information Display (DID), a projector display, a Near Eye Display (NED), an electronic picture frame, a camera, or a camcorder without limitations.

According to one or more embodiments, the electronic device 100 may receive and display video data having various compression images and/or various resolution in a streaming method. In one or more examples, the electronic device is not limited thereto and may display downloaded video data. For example, the electronic device 100 may receive an image in a compressed form such as Moving Picture Experts Group (MPEG) (e.g. MP2, MP4, MP7, etc.), Joint Photographic Experts Group (JPEG), Advanced Video Coding (AVC), H.264, H.265, or High Efficiency Video Codec (HEVC). Otherwise, the electronic device 100 may receive any one image of Standard Definition (SD), High Definition (HD), Full HD, or Ultra HD images.

For example, the electronic device 100 may display video data including streaming video data, in particular, video data including subtitle data together. The subtitle data means text data in which voice audio data is translated in a language which may be understood by a user. According to one or more embodiments, the subtitle data may be included and received in one area of a frame included in video data. According to another example, the electronic device 100 may synchronize and display subtitle data received through a separate data channel with audio data corresponding to video data.

According to one or more embodiments, the electronic device 100 may output voice data in a language corresponding to the subtitle data through real time audio track generation with respect to the subtitle data. In particular, the electronic device 100 may generate and output audio track data of a voice on which original video data and/or a context of the original audio data is reflected rather than audio track data of a fixed voice. If the video data is received in real time streaming, the audio track data may be also generated and outputted in real time. According to one or more embodiments, the electronic device 100, if the electronic device includes a speaker, may output audio track data through the speaker, and if the electronic device does not include the speaker, may transmit the audio track data to an external speaker device.

Hereinafter, are described various embodiments of generating audio track data of a voice on which original video data and/or a context of the original audio data is reflected based on subtitle data.

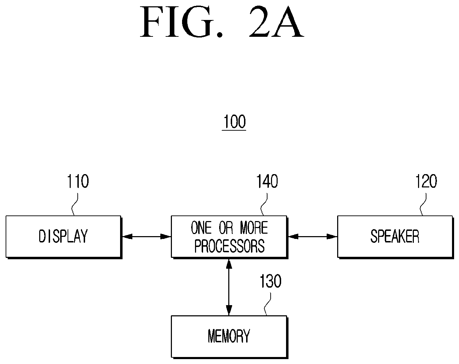

FIG. 2A is a block diagram illustrating a configuration of an electronic device according to one or more embodiments.

According to FIG. 2A, the electronic device 100 includes a display 110, a speaker 120, memory 130, and one or more processors 140.

The display 110 may be implemented as a display including a spontaneous emission element or a display including a non-spontaneous emission element and backlight. For example, the display may be implemented as various types of displays such as a liquid crystal display (LCD), an organic light emitting diode (OLED) display, a light emitting diode (LED), a micro LED, a mini LED, a plasma display panel (PDP), a quantum dot (QD) display, and a quantum dot light-emitting diode (QLED). The display 110 may include a driving circuit which may be implemented in a form such as an a-si TFT, a low temperature poly silicon (LTPS) TFT, or an organic TFT (OTFT), a backlight unit, or the like. In one or more examples, the display 110 may be implemented as a flexible display, a rollable display, a 3D display, a display in which a plurality of display modules are physically connected, or the like.

The speaker 120 outputs audio data. For example, the speaker 120 may convert the digital audio data processed in the one or more processors 140 to analog audio data and then amplify and output the converted analog audio data. For example, the speaker 120 may include at least one speaker unit configured to output at least one channel, a D/A converter, an audio amplifier, or the like. According to one or more embodiments, the speaker 120 may be implemented to output various multichannel acoustic signals. For example, the one or more processors 140 may control the speaker 120 to enhancement process and output the generated audio track data. According to one or more embodiments, the electronic device 100 may not include a speaker and may transmit the audio track data to the external speaker device to output the generated audio track data through the external speaker device.

The memory 130 is electrically connected to the one or more processors 140 and store data required for various embodiments of the disclosure. The memory 130 may be implemented as memory embedded in an electronic device 100 according to a use for data storage or may be implemented as memory detachable from the electronic device 100. For example, data for driving the electronic device 100 is stored in memory embedded in the electronic device 100 and data for an extension function of the electronic device 100 may be stored in memory detachable from the electronic device 100. In one or more examples, memory embedded in the electronic device 100 may be implemented as at least one of volatile memory (e.g. dynamic RAM (DRAM), static RAM (SRAM), synchronous dynamic RAM (SDRAM), etc.) or non-volatile memory (e.g. one time programmable ROM (OTPROM), programmable ROM (PROM), erasable and programmable ROM (EPROM), electrically erasable and programmable ROM (EEPROM), mask ROM, flash ROM, flash memory (e.g. NAND flash memory, NOR flash memory, etc.), a hard drive, or a solid state drive(SSD)). In one or more examples, memory detachable from the electronic device 100 may be implemented as a memory card (e.g. a Compact Flash (CF) card, a Secure Digital (SD) card, a Micro Secure Digital (Micro-SD) card, a Mini Secure Digital (Mini-SD) card, an extreme Digital (xD) card, a Multi-Media Card (MMC), etc.), external memory connectable to a USB port (e.g. USB memory), etc.

According to one or more embodiments, the memory 130 may store a computer program including at least one instruction or instructions for controlling the electric device 100.

According to one or more embodiments, the memory 130 may store an image received from an external device (e.g. a source device), an external storing medium (e.g. a USB), an external server (e.g. webhard), or the like, that is, an input image, various data, information, or the like.

According to one or more embodiments, the memory 130 may store information about an AI model (or a neural network model) including a plurality of layers. In one or more examples, storing information about the AI model may mean storing various information related to an operation of the AI model, for example, information about a plurality of layers included in the AI model, and information about a parameter (e.g. a filter coefficient, a bias, etc.) used in each of the plurality of layers.

According to one or more embodiments, the memory 130 may store various information required for image quality processing, for example, information performing at least one of Noise Reduction, Detail Enhancement, Tone Mapping, Contrast Enhancement, Color Enhancement, or Frame rate Conversion, an algorithm, and an image quality parameter. In one or more examples, the memory 130 may store a final output image generated by image processing.

According to one or more embodiments, the memory 130 may be implemented as single memory storing data generated from various operations according to the disclosure. In one or more examples, according to another embodiment, the memory 130 may be implemented to include a plurality of memory storing each different type of data or storing each data generated from different steps.

In the embodiments of the present disclosure, it is described that various data is stored in the external memory 130 of the one or more processors 140, however, as understood by one of ordinary skill in the art, at least part of the data may be stored in memory inside the processor 140 according to at least one embodiment among the electronic device 100 or the one or more processors 140.

The one or more processors 140 may perform operations of the electronic device 100 according to various embodiments by executing at least one instruction stored in the memory 130.

The one or more processors 140 control operations of the electronic device 100 overall. Specifically, the processor 140 may be connected to each component of the electronic device 100 to control operations of the electronic device 100 overall. For example, the processor 140 may be electrically connected to the display 110 and memory 130 to control the operations of the electronic device 100 overall. The processor 140 may be configured of one processor or a plurality of processors.

According to the embodiments of the present disclosure, a function related to AI may operate through the one or more processors 140 and the memory 130.

The one or more processors 140 may be implemented as The one or more processors 140 may include at least one of a Central Processing Unit (CPU), a Graphic Processing Unit (GPU), or a Neural Processing Unit (NPU) but are not limited to the aforementioned examples of the processors.

The CPU is a general purpose processor capable of performing not only a general operation but also an AI operation and may efficiently perform a complex program through a multilayer cache structure. The CPU is favorable for a series processing method in which an organic connection between the previous calculation result and the next calculation result is possible through a sequential calculation. The general purpose processor is not limited to the aforementioned examples, excluding a case that the disclosure designates it as the aforementioned CPU.

The GPU is a processor for a mass operation such as a floating point operation used for graphic processing and may integrate a core massively to perform a mass operation in parallel. In particular, the GPU may be favorable for a parallel processing method such as a convolution operation compared to the CPU. In one or more examples, the GPU may be used for a co-processor for supplementing a function of the CPU. The processor for the mass operation is not limited to the aforementioned examples, excluding a case that the disclosure designates it as the aforementioned GPU.

The NPU is a processor specific to an AI operation using an artificial neural network, wherein each layer configuring the artificial neural network may be implemented as hardware (e.g. silicon). In one or more examples, the NPU is designed to be specific to the specification required by the manufacturer and thus its degree of freedom is lower than that of the CPU or the GPU but may efficiently perform the AI operation required by the manufacturer. In one or more examples, as a processor specific to the AI operation, the NPU may be implemented as various forms such as a Tensor Processing Unit (TPU), an Intelligence Processing Unit (IPU), or a Vision processing unit (VPU). The AI processor is not limited to the aforementioned examples, excluding a case that the disclosure designates it as the aforementioned NPU.

In one or more examples, the one or more processors 140 may be implemented as a System on Chip (SoC). In one or more examples, the SoC may further include memory and a network interface such as a bus for data communication between the processor and the memory besides the one or more processors 140.

If the SoC included in the electronic device 100 includes a plurality of processors, the electronic device may perform an operation related to AI (e.g., an operation related to learning or inference of the AI model) by using a partial processor of the plurality of processors. For example, the electronic device 100 may perform an operation related to the AI by using at least one of a GPU, a NPU, a VPU, a TPU, or a hardware accelerator specific to the AI operation such as a convolution operation or a matrix product calculation among the plurality of processors. The above descriptions are merely examples, and as understood by one of ordinary skill in the art, the operations related to the AI may be processed by using a general purpose processor such as a CPU.

In one or more examples, the electronic device 100 may perform an operation with respect to a function related to AI by using a multicore (e.g. a dual core, a quad core) included in one processor. In particular, the electronic device may perform the AI operation such as the convolution operation and the matrix product calculation in parallel by using the multicore included in the processor.

The one or more processors 140 may be referred to as a processor 140 for convenience of the description.

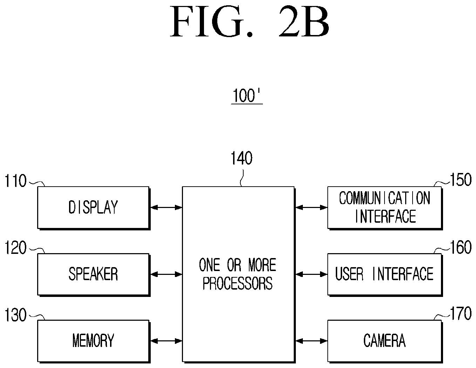

FIG. 2B is a view illustrating a detailed configuration of an example of an electronic device according to one or more embodiments.

According to FIG. 2B, the electronic device 100' includes a display 110, a speaker 120, memory 130, one more processors 140, a communication interface 150, a user interface 160, and a camera 170. The detailed description of components overlapped with the components shown in FIG. 2A among the components shown in FIG. 2B is omitted.

The communication interface 150 may perform communication with an external device. The communication interface 150 may receive an input image in a streaming or download method from an external device (e.g. a source device), an external storing medium (e.g. USB memory), an external server (e.g. webhard), or the like through a communication method such as AP-based Wi-Fi (Wi-Fi, a wireless LAN), Bluetooth, Zigbee, a wired/wireless Local Area Network (LAN), a Wide Area Network (WAN), Ethernet, IEEE 1394, a Mobile High-Definition Link (MHL), Audio Engineering Society/European Broadcasting Union (AES/EBU), an optical method, or a coaxial method. In one or more examples, the input image may be any one digital image of a Standard Definition (SD) image, a High Definition (HD) image, a full HD image, or an ultra HD image but is not limited thereto.

The user interface 160 may be implemented as a device such as a button, a touch pad, a mouse, and a keyboard or may be implemented as a touch screen capable of performing the aforementioned display function and also a manipulation input function together. According to one or more embodiments, the user interface 160 may be implemented as a transceiver of a remote controller and may receive a remote control signal. The transceiver of the remote controller may receive a remote signal or transmit the remote signal from/to an external remote control device through at least one communication method of an infrared communication method, a Bluetooth communication method, or a Wi-Fi communication method.

The camera 170 may be turned on according to a preset event and perform capturing. The camera 170 may convert the captured image to an electric signal and generate image data based on the converted signal. For example, a subject may be converted to an electric image signal through a semiconductor optical device, a charge coupled device (CCD), and the converted image signal as above may be amplified and converted to a digital signal and then may be signal processed.

The electronic device 100' may additionally include a tuner and a demodulator according to one or more embodiments. The tuner may tune a channel selected by the user among radio frequency (RF) broadcasting signals received through an antenna or all prestored channels to receive the RF broadcasting signals. The demodulator may receive and demodulate a Digital IF (DIF) signal converted in the tuner and may perform channel demodulation or the like.

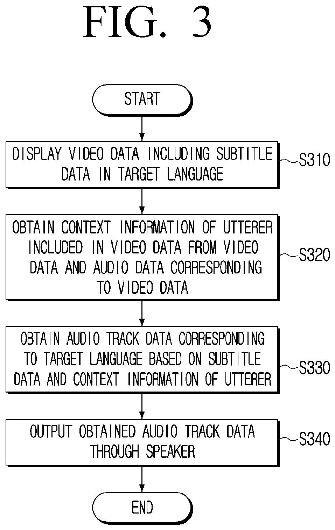

FIG. 3 is a view illustrating an audio track obtaining method according to one or more embodiments. The method illustrated in FIG. 3 may be performed by the electronic device 100 (FIG. 2A) or the electronic device 100' (FIG. 2B).

According to one or more embodiments, as shown in FIG. 3, the processor 140 may control the display 110 to display video data including subtitle data in a target language (S310). For example, the processor 140 may receive and display video data including subtitle data or may synchronize and display subtitle data received through a separate data channel with audio data corresponding to video data.

Then, the processor 140 may obtain context information of an utterer included in video data from at least one of video data or audio data corresponding to the video data. In one or more examples, the context information of the utterer may include at least one of gender information, age information, emotion information, character information, or speech volume information of the utterer.

Then, the processor 140 may obtain audio track data corresponding to a target language based on subtitle data and the context information of the utterer. In one or more examples, the audio track may be a track in which an audio signal is digitally recorded. For example, the processor 140 may obtain not only text data in a target language corresponding to subtitle data obtained based on audio data/video data, but also audio track data on which meta data (gender, age, emotion, etc.) of the utterer is included or indicated.

Thereafter, the processor 140 may control the speaker 120 to output the obtained audio track data.

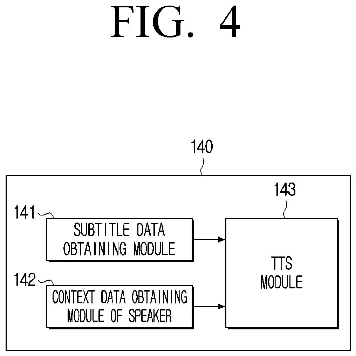

FIG. 4 is a view illustrating an audio track obtaining method according to one or more embodiments.

The processor 140 shown in FIG. 4 may generate an audio track by using a subtitle data obtaining module 141, a context data obtaining module 142 of an utterer, and a TTS module 143. In one or more examples, each module may be implemented as at least one software, at least one hardware, and/or a combination thereof. For example, at least one of the subtitle data obtaining module 141, the context data obtaining module 142 of the utterer, and the TTS module 143 may be implemented to use a trained AI model and/or a predefined algorithm. The subtitle data obtaining module 141, the context data obtaining module 142 of the utterer, and the TTS module 143 may be included in the electronic device 100 but may be distributed in at least one server according to one or more embodiments. For example, the subtitle data obtaining module 141 may be included in a first server, the context data obtaining module 142 of the utterer may be included in a second server, and the TTS module 143 may be included in a third server. In one or more examples, the first to third servers may be directly connected to one another or may be connected through the electronic device 100 (or a relay server) to transmit and receive data.

According to one or more embodiments, the processor 140 may obtain the subtitle data streaming from a specific data channel or obtain the subtitle data through text recognition with respect to frames included in the video data by using the subtitle data obtaining module 141. For example, the processor 140 may obtain subtitle data from a digital stream streaming from the specific data channel.

According to one or more embodiments, the processor 140 may obtain the context information of the utterer from video data and audio data by using the context data obtaining module 142 of the utterer. In one or more examples, the context information of the utterer may include at least one of gender information, age information, emotion information, character information, or speech volume information of the utterer. In one or more example, the context information may be included in metadata associated with the video data. In one or more examples, the processor 140 may perform image recognition on one or more video frames included in the video data to obtain the context information.

According to one or more embodiments, the processor 140 may convert text data corresponding to a subtitle (e.g., text data in a target language) to a voice by using a TTS module 143. In this case, the TTS module 143 may not convert text data corresponding to the subtitle to a predefined voice but may convert it to a voice on which the context of the utterer is reflected. For example, the TTS module 143 may obtain audio track data on which gender information, age information, emotion information, character information, or speech volume information of the utterer is reflected. The TTS module 143 may further obtain audio track data of a pitch/tone similar with a tone of the utterer as much as possible based on information about a voice obtained based on the audio data, for example, frequency information (a frequency band, a frequency spectrum, a frequency waveform, etc.).

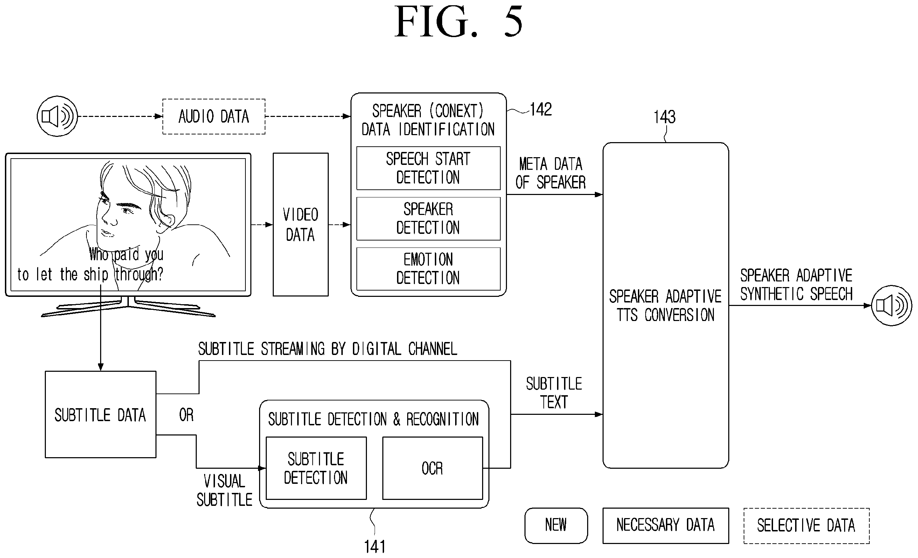

FIG. 5 is a view specifically illustrating the audio track obtaining method shown in FIG. 4.

According to one or more embodiments shown in FIG. 5, the context data obtaining module 142 of the utterer (hereinafter, the context data obtaining module) may identify the utterer's data, for example, context data based on the audio data and the video data. In one or more examples, the audio data may be data which is synchronized with video data and received and may be a partially preprocessed and/or postprocessed data, but is not limited thereto. For example, if encoded audio data and/or video data is received, it may be used for obtaining the context information of the utterer after decoding. For example, the audio data and/or video data may be data stored in an output buffer before being decoded and outputted. However, the embodiments are not limited to these configurations. For example, after the audio data and/or video data buffered in a receive buffer is decoded, the audio data and/or video data may be stored in separate memory rather than an output buffer for the context information of the utterer. In one or more examples, the disclosure is not limited these configurations, and it is possible to capture a screen in a state that video data is displayed on a screen and recognize subtitle data included in the captured screen to obtain the subtitle text data.

According to one or more embodiments, the context data obtaining module 142 may identify the context data of the utterer including timing data related to a speech start of the utterer from the video data and the audio data, identification data of the utterer, and emotion data of the utterer. In one or more examples, the identification data of the utterer may include various types of identification data which may identify the utterer such as gender information, age information, character information, or actor information of the utterer. The emotion data of the utterer may include various types of emotion data such as joy, sadness, anger, surprise, boredom, and calmness.

According to one or more embodiments, the context data obtaining module 142 may obtain each of context data related to each utterer, for example, a first utterer and a second utterer. The context data obtaining module 142 may obtain first timing data related to a speech start of the first utterer, first identification data of the first utterer, and the first emotion data of the first utterer and may obtain second timing data related to a speech start of the second utterer, second identification data of the second utterer, and the second emotion data of the second utterer. According to one or more embodiments, the context data obtaining module 142 may analyze a characteristic (e.g., an intonation, a pitch, or a frequency) of voice data included in the audio data, identify whether the voice data is the same utterer's voice or another utterer's voice, and obtain first timing data and second timing data based on the identification.

In one or more examples, the context data obtaining module 142 may obtain a characteristic parameter of the utterer based on the context information of the utterer. In one or more examples, the characteristic parameter of the utter may include at least one of a voice type, a voice intonation, a voice pitch, a voice speech speed, or a voice volume. In one or more examples, the characteristic parameter of the utter may further include information such as a frequency band, a frequency spectrum, or a frequency waveform of a voice.

The subtitle data obtaining module 141 may obtain subtitle text data through text recognition with respect to frames included in the video data. For example, the processor 140 may obtain subtitle data through text area (or subtitle area) recognition and optical character reader (OCR) recognition with respect to a video frame. For example, the processor 140 may input video data into a trained AI model (or an algorithm) to obtain subtitle data. In one or more examples, the trained AI model may be trained to detect, recognize, and output text data included in the video data.

According to one or more embodiments, if the subtitle data is streamed from a specific data channel in a digital stream, the subtitle data may be provided to the TTS module 143 without passing through the subtitle data obtaining module 141. In one or more examples, since synchronization between characteristic data of the utterer and subtitle data is needed even in this case, it is possible that the subtitle data obtaining module 141 performs the relevant function.

The TTS module 143 may generate speaker adaptive audio track data based on subtitle text data and the character parameter of the utterer. According to one or more embodiments, subtitle text data outputted from the subtitle data obtaining module 141 and/or subtitle text data streaming from a specific data channel may be synchronized with the characteristic parameter of the utterer outputted from the context data obtaining module 142 to be inputted into the TTS module 143. In this case, the synchronization may be performed at an output end of the subtitle data obtaining module 141 and the context data obtaining module 142 or may be performed at an input end of the TTS module 143. For example, the subtitle text data and the characteristic parameter of the utterer may be synchronized based on timing data related to a speech start obtained from the video data and the audio data and maybe be inputted to the TTS module 143.

According to one or more embodiments, the TTS module 143, if the video data includes a plurality of utterers, for example, a first utterer and a second utterer, may convert a corresponding subtitle text based on context data of each utterer. For example, the TTS module 143 performs TTS conversion on first subtitle text data corresponding to the first utterer based the first timing data, first identification data of the first utterer, and first emotion data of the first utterer to obtain first audio track data corresponding to the first utterer. In one or more examples, the TTS module 143 may perform TTS conversion on second subtitle data corresponding to the second utterer based the second timing data, second identification data of the second utterer, and second emotion data of the second utterer to obtain second audio track data corresponding to the second utterer.

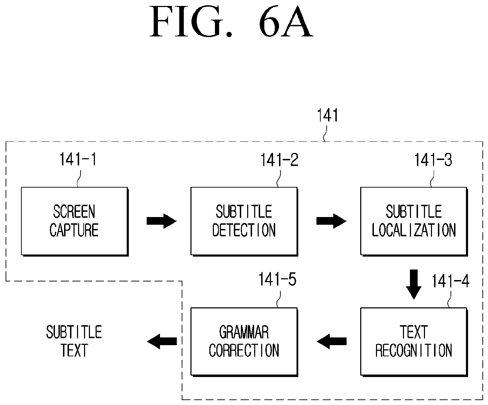

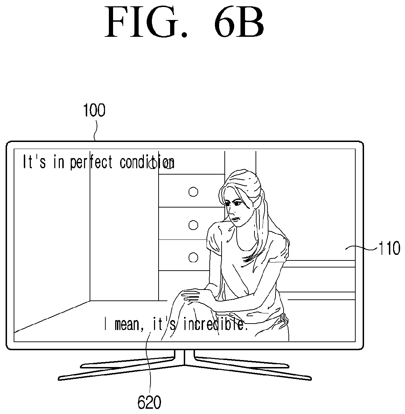

FIGS. 6A and 6B are views illustrating a method of capturing a screen to obtain subtitle text data according to one or more embodiments.

According to one or more embodiments, the subtitle data obtaining module 141 may recognize subtitle data included in video data to obtain the subtitle text data.

According to one or more embodiments shown in FIG. 6A, the subtitle data obtaining module 141 may capture a screen (141-1), and if identifying that a subtitle area is included in the captured screen image (S141-2), may identify a position of the subtitle area (141-3). Then, the subtitle data obtaining module 141 may perform text recognition (e.g. OCR recognition) at the identified position of the subtitle area (141-4) to obtain a text. Thereafter, the subtitle data obtaining module 141 may pass through grammar correction with respect to the obtained text (141-5) to obtain a final subtitle text (141-6). For example, as shown in FIG. 6B, it may capture a screen while video data is displayed on a display 110 and may obtain subtitle text through text recognition with respect to a subtitle area 610, 620 included in the captured screen image.

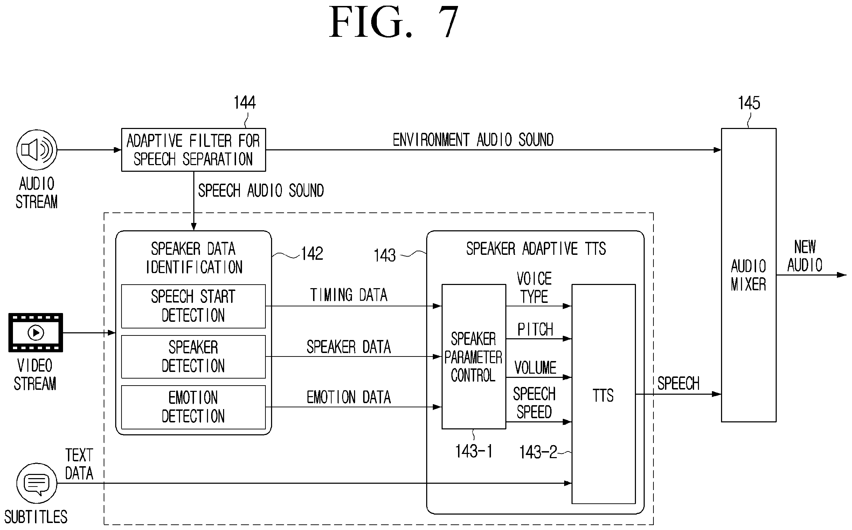

FIG. 7 is a view illustrating an audio track obtaining method according to one or more embodiments.

According to FIG. 7, the processor 140 may generate an audio track by using a subtitle data obtaining module 141, a context data obtaining module 142 of an utterer, a TTS module 143, an adaptive filter module 144, and an audio mixer 145. The detailed description of components overlapped with the components shown in FIGS. 4 and 5 among components shown in FIG. 7 is omitted. In one or more examples, each module may be implemented as at least one software, at least one hardware, and/or a combination thereof. The subtitle data obtaining module 141 was sufficiently described in FIG. 5, and thus, its illustration will be omitted for convenience of the description.

The processor 140 may separate audio data into background audio data and speech audio data by using, in one or more examples, the adaptive filter module 144. The background audio data separated through the adaptive filter module 144 may be provided to the audio mixer 145 and the speech audio data may be provided to the context data obtaining module 142 of the utterer.

According to one or more embodiments, the context data obtaining module 142 may identify the context data of the utterer including timing data related to a speech start from the video data and the speech audio data, identification data of the utterer, and emotion data of the utterer. In one or more examples, the context data obtaining module 142 may obtain a characteristic parameter of the utterer based on the context information of the utterer. In one or more examples, the characteristic parameter of the utter may include at least one of a voice type, a voice intonation, a voice pitch, a voice speech speed, or a voice volume. Besides, the characteristic parameter of the utter may further include information such as a frequency band, a frequency spectrum, or a frequency waveform of a voice.

The TTS module 143 may generate speaker adaptive audio track data based on subtitle text data and the character parameter of the utterer. According to one or more embodiments, the TTS module 143 may adjust the characteristic parameter of the utterer based on timing data, identification data of the utterer, and emotion data of the utterer (143-1) and perform the TTS with respect to subtitle text data based on the adjusted parameter to generate speech data corresponding to the subtitle text.

According to one or more embodiments, the TTS module 143 may adjust at least one of a voice type, a voice intonation, a voice pitch, a voice speech speed, or a voice volume based on the timing data, the identification data of the utterer, and the emotion data of the utterer.

Thereafter, the audio mixer 145 may output new audio data, that is, audio track data by mixing the background audio data and speech data outputted from the TTS module 143.

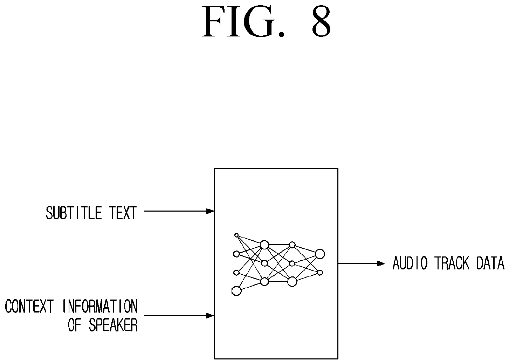

FIG. 8 is a view illustrating an implemented form of a TTS module according to one or more embodiments.

According to one or more embodiments, the TTS module may be implemented as a stored and predefined operation rule or an AI model to process input data. The predefined operation rule or the AI model is constructed by learning. In one or more examples, the construction by learning means that the predefined operation rule or the AI model having a desired characteristic is constructed by applying a learning algorithm to various learning data. This learning may be performed in a device itself where the AI according to the disclosure is performed and also may be performed through a separate server/system.

The AI model may be composed of a plurality of neural network layers. At least one layer has at least one weight value and performs an operation of the layer through an operation result of the previous layer and at least one defined operation. An example of the neural network is a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep Q-Network, and a Transformer, wherein the neural network of the disclosure is not limited to the aforementioned example, excluding a case that the neural network is designated in the disclosure. The learning algorithm may be a method in that a given target device (e.g. a robot) is trained by using a plurality of learning data such that the given target device itself may make or predict a decision. Examples of the learning algorithm are supervised learning, unsupervised learning, semi-supervised learning, or reinforcement learning, wherein the learning algorithm is not limited to the aforementioned examples, excluding a case that the learning algorithm is designated in the disclosure.

According to one or more embodiments, the TTS module may be implemented as the trained AI model. In this case, the processor 140 may obtain audio track data by inputting subtitle text data and context information of the utterer into the trained AI model. In one or more examples, the trained AI model may be a TTS AI model trained to convert and output text data to speaker adaptive audio data based the context information of the utterer. According to one or more embodiments, the trained AI model may obtain a characteristic parameter of the utterer based on the context information of the utterer and be trained to output the audio track data in which the subtitle text data is converted to the speaker adaptive audio data based on the characteristic parameter of the utterer.

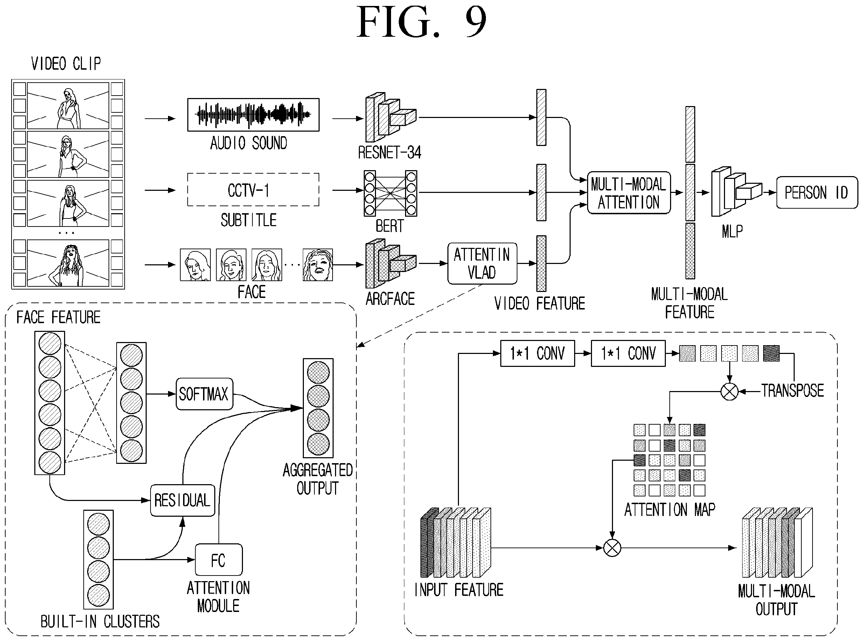

FIG. 9 is a view illustrating an identification data obtaining method of an utterer according to one or more embodiments.

According to one or more embodiments, a processor 140 may obtain a person (identity) ID from a video clip by using a feature extractor, a frame feature aggregation module, a multi-modal fusion module, and a classifier. For example, after face embeddings may be collected by Attention VLAD, it may converge with other modal embeddings by a multi-modal fusion module.

A feature extractor may perform image preprocessing and/or feature extraction. Multi-modal information such as a face, an audio sound, a body, a text, a face, and an audio sound may be obtained from an input video. Thereafter, the feature extractor may extract each embedding by using the pre-trained model.

A frame aggregation module may aggregate a feature of frames configuring a video. For example, the video may be configured of continuously changing frames. For example, if a face is detected in a specific frame, there is a possibility that a face having the same label is included in an adjacent frame even though an angle, a facial expression, or definition may be different. After measuring a face quality, to remove complexity due to a different number of faces in different clips, the frame feature may be aggregated based on NetVLAD. The frame aggregation module, if an arbitrary number of features are inputted, may generate a fixed length embedding as a video-level face feature.

The multi-modal fusion module may learn a weight value of a multi-modal feature and readjust the multi-modal feature according to the weight value. This is because the multi-modal feature of the video clip may be supplementary and be overlapped.

The classifier may predict the person ID. Under the prerequisite of focusing on supervised person recognition in a video, the person ID may be predicted by using Multi-Layer Perceptron (MLP) as the classifier.

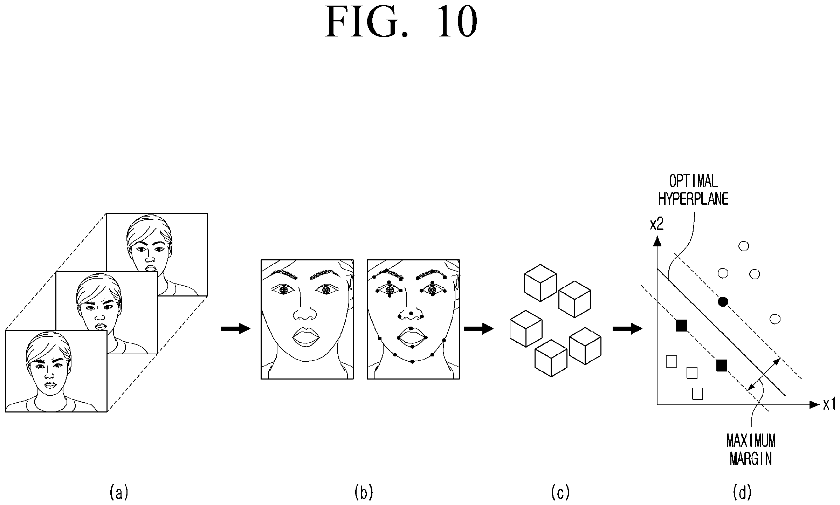

FIG. 10 is views illustrating an emotion data obtaining method of an utterer according to one or more embodiments.

According one or more embodiments, facial emotion recognition (FER) may be performed in a sequence of a face, face component detection, feature extraction, facial expression classification. For example, as shown FIG. 10, in an input image (a), the FER may detect a face area and a face land mark (b), extract spatial and temporal features from a face component (e.g. eyes and a nose) and the land mark (c), and determine a facial expression based on one of face categories identified by using a pre-trained pattern classifier such as a Support Vector Machine (SVM), AdaBoost, and Random Forest (d). In one or more examples, the above is merely an example, wherein emotion data of the utterer may be obtained in various methods besides the above.

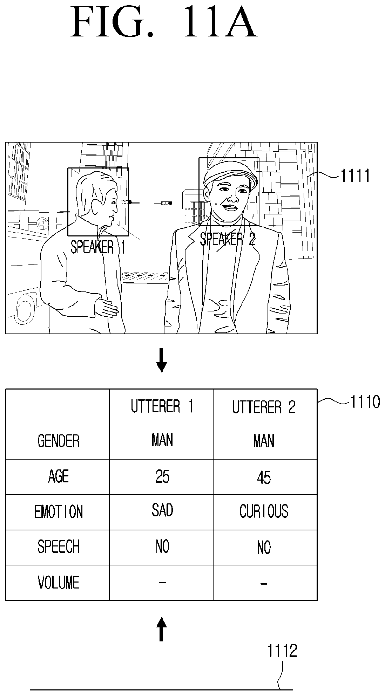

FIGS. 11A to 11D are views illustrating an example of obtaining context information of an utterer according one or more embodiments.

According to FIG. 11A, first context information 1110 may be obtained based on first video data 1111 and/or first audio data 1112. For example, gender, age, emotion, whether to speak, speech volume, or the like of each of a plurality of utters (an utter 1, an utter 2) included in the first video data 1111 may be obtained. In one or more examples, since the first audio data 1112 is not detected in the relevant example, the first context information 1110 excluding whether to speak may be obtained based on the first video data 1111.

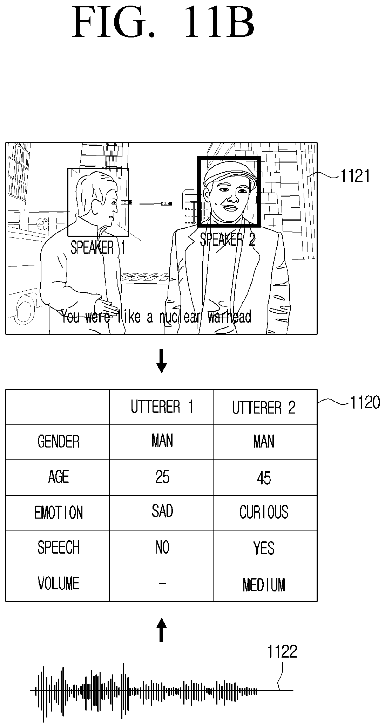

According to FIG. 11B, second context information 1120 may be obtained based on second video data 1121 and/or second audio data 1122. For example, gender, age, emotion, whether to speak, speech volume, or the like of each of a plurality of utters (an utter 1, an utter 2) included in the second video data 1121 may be obtained. In the relevant example, since it is determined that only the utterer 2 speaks, context information of the utterer 1 may be identified only based on the second video data 1121, and context information of the utterer 2 may be identified based on the second video data 1121 and the second audio data 1122.

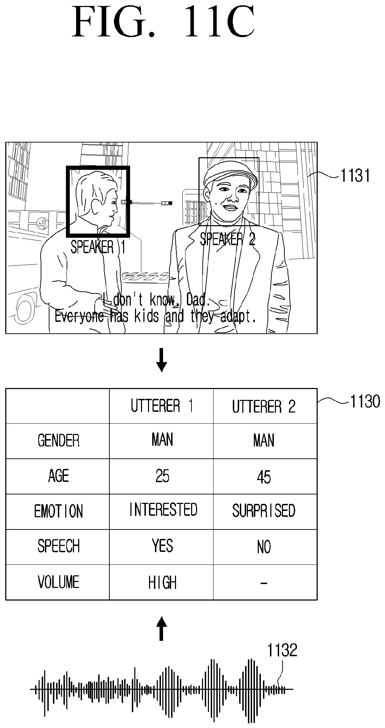

According to FIG. 11C, third context information 1130 may be obtained based on third video data 1131 and/or third audio data 1132. In the relevant example, since it is determined that only the utterer 1 speaks, context information of the utterer 2 may be identified only based on the third context information 1130, and context information of the utterer 1 may be identified based on the third video data 1131 and the third audio data 1132.

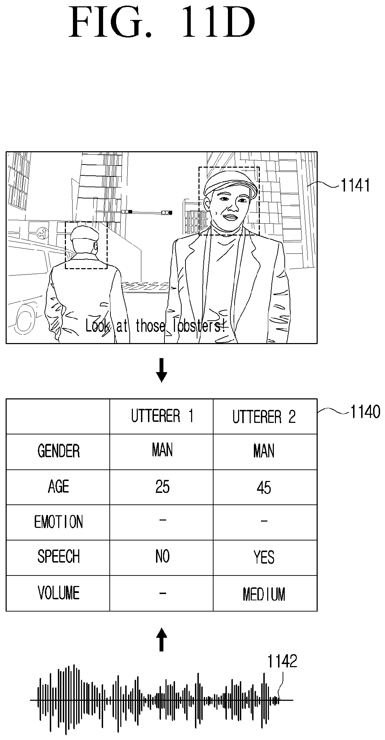

According to FIG. 11D, fourth context information 1140 may be obtained based on fourth video data 1141 and/or fourth audio data 1142. In the relevant example, since it is determined that only the utterer 2 speaks, context information of the utterer 1 may be identified only based on the fourth video data 1141, and context information of the utterer 2 may be identified based on the fourth video data 1141 and the fourth audio data 1142.

In the above example, a case that the utterers 1 and 2 speak, as understood by one of ordinary skill in the art, in the case that the utterers 1 and 2 speak at the same time, context information of each utterer may be identified by identifying each of a voice of the utterer 1 and a voice of the utterer 2 from the audio data based on the characteristic parameter of voices.

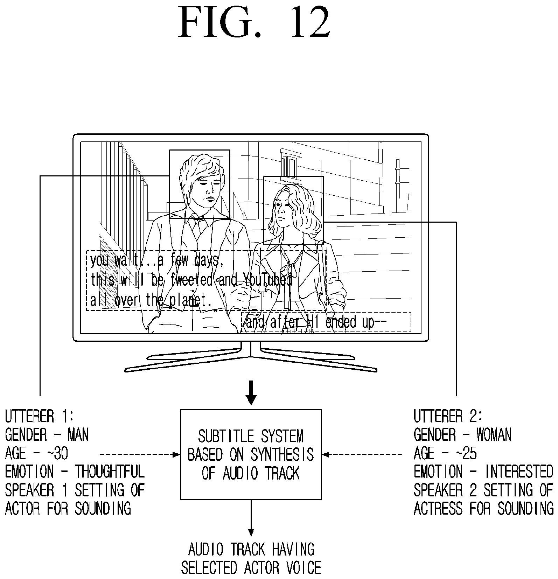

FIGS. 12 to 14 are views illustrating a use case according one or more embodiments.

According to ------one or more embodiments as shown in FIG. 12, an audio track on which a voice feature and emotion of the utterer are reflected may be generated through utterer identification. Accordingly, natural audio track generation is possible. In one or more examples, a user may implement that the user defines a feature of an utterer and/or a voice of an actor such that a specific character voice is uttered in the defined voice on a synthetic audio track.

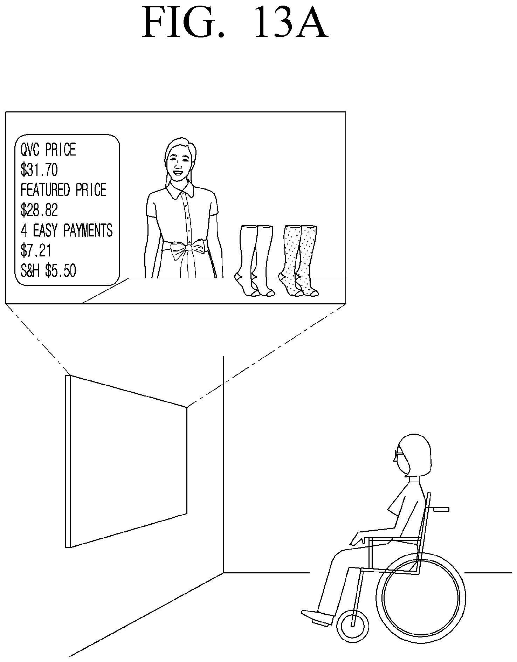

According to one or more embodiments as shown in FIG. 13A, a visually impaired person may not see a specific detailed text displayed on a screen in real time, but this specific detailed text may be also recognized by using an audio track. According to one or more embodiments as shown in FIG. 13A, a mode is provided in which an area from which a voice is outputted is outlined or highlighted by using the TTS in a state that an original audio sound is suppressed or paused.

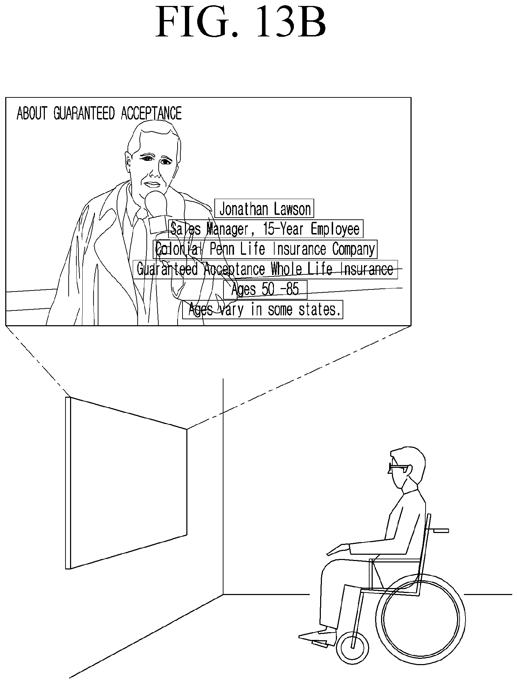

According to one or more embodiments as shown in FIG. 13B, the visually impaired person may not access to data which is displayed on a TV screen in real time but is not uttered. However, according to one or more embodiments, a mode for recognizing and outputting all texts excluding a subtitle in a voice by using the TTS may be provided. For example, if the user suppresses or pauses the original audio sound and then returns to a normal mode, all texts excluding the subtitle may be recognized and outputted in a voice by using the TTS.

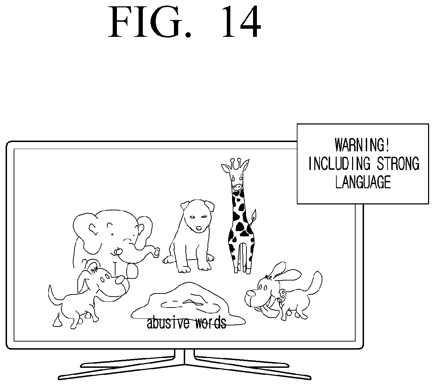

According to one or more embodiments as shown in FIG. 14, if an improper word or a phrase is included in a content, there may be a need for removing it (e.g. a parental control mode). In this case, an unpleasant word or phrase may be masked or filtered by using audio track synthesis.

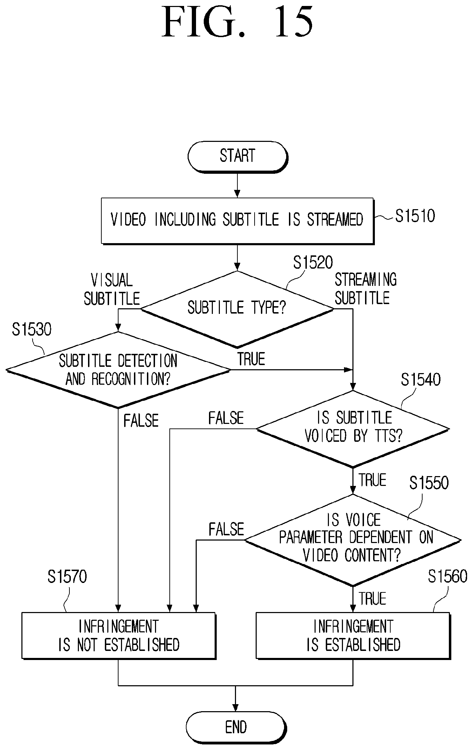

FIG. 15 is a view illustrating an infringement uncovering method according to one or more embodiments.

According to FIG. 15, if a video content including a subtitle is streamed to a device (S1510), whether a subtitle type is a visual subtitle or a streaming subtitle may be identified (S1520). In one or more examples, a subtitle language may be a language different from a language provided through the existing audio track. The visual subtitle may be a subtitle fixed to a frame of a video content and the streaming subtitle may be a subtitle streamed separately from video data.

If the subtitle type is the visual subtitle, whether detection and recognition of the subtitle is possible may be identified (S1530).

If detection and recognition of the subtitle is possible (S1530:True), whether the subtitle may be voiced by the TTS may be identified (S1540).

In one or more examples, if the subtitle type is the streaming subtitle, whether the subtitle may be voiced by the TTS may be identified (S1540).

If the subtitle may be voiced by the TTS (S1540:True), whether the characteristic parameter of the voice is dependent on a video content may be identified (S1550).

If the characteristic parameter of the voice is dependent on the video content (S1550:True), it may be considered as infringement establishment (S1560). According to one or more embodiments of the disclosure, this is because it may be considered such that the subtitle is voiced by reflecting the context of the video content.

In one or more examples, if a case corresponds to at least one of a case that detection and recognition of the visual subtitle are not possible (S1530:False), a case that the subtitle may not be voiced by the TTS (S1540:False), or a case that the characteristic parameter of the voice is not dependent on the video content (S1550:False), the case may be considered such that infringement is not established. According to one or more embodiments of the disclosure, this is because it may be not considered such that the subtitle is voiced by reflecting the context of the video content.

According to the various embodiments, an audio track on which a voice feature and emotion of the utterer are reflected may be generated through utterer identification. Accordingly, since natural audio track generation is possible, a viewing experience of the user may be improved. In one or more examples, a user may implement that the user defines a feature of an utterer and/or a voice of an actor such that a specific character voice is uttered in the defined voice on a synthetic audio track, and in this regard, the viewing experience of the user may be improved.

In one or more examples, the aforementioned methods according to various embodiments may be implemented in a form of an application installable in the existing electronic device. In one or more examples, at least part of the methods according to various embodiments of the disclosure as above may be performed by using a deep learning-based AI model, that is, a learning network model.

In one or more examples, the aforementioned methods according to various examples of the disclosure may be implemented only with a software upgrade or a hardware upgrade with respect to the existing electronic device.

In one or more examples, it is possible to implement various examples of the disclosure as above through an embedded server included in the electronic device or an external server of the electronic device.

In one or more examples, according to one or more embodiments of the disclosure, various examples described above may be implemented as software including instructions stored in machine (e.g. a computer) readable storage media. The machine refers to a device which calls instructions stored in the storage media and is operable according to the called instructions, wherein the machine may include an electronic device (e.g. an electronic device A) according to the disclosed embodiments. If the instructions are executed by a processor, the processor may perform a function corresponding to the instructions directly or by using other components under control of the processor. The instructions may include a code generated or executed by a compiler or an interpreter. The machine readable storage medium may be provided in a form of a non-transitory storage medium. In one or more examples, the term 'non-transitory' merely means that the storage media do not include a signal and are tangible, wherein the term does not distinguish a case that data is stored in the storage media semipermanently from a case that data is stored in the storage media temporarily.

In one or more examples, according to one or more embodiments of the disclosure, the method according to various examples described above may be provided to be included in a computer program product. The computer program product may be traded between a seller and a buyer as goods. The computer program product may be distributed in a form of a machine readable storage medium (e.g. compact disc read only memory (CD-ROM)) or on-line via an application store (e.g. play store^{™}). In the case of on-line distribution, at least part of the computer program product may be stored at least temporarily or may be generated temporarily in a storage medium such as memory of a server of a manufacturer, a server of an application store, or a relay server.

In one or more examples, each of components (e.g. a module or a program) according to the various embodiments above may be configured as a single item or a plurality of items, wherein a partial subcomponent of the aforementioned relevant subcomponents may be omitted or another subcomponent may be further included in various embodiments. Mostly or additionally, some components (e.g. a module or a program) may be integrated into one item and may identically or similarly perform a function implemented by each of the relevant components before the integration. According to various embodiments, operations performed by a module, a program, or another component may be executed sequentially, in parallel, repetitively, or heuristically, at least part of the operations may be executed in different orders or be omitted, or another operation may be added.

Although example embodiments of the present disclosure are shown and described, it will be understood that embodiments of the disclosure is not limited to the aforementioned embodiments and various modifications may be implemented by those skilled in the art without deviating from the gist of the disclosure claimed in the scope of claims, wherein these modifications should not be independently understood from the technical spirit or prospect of the disclosure.

## Claims

1. An electronic device comprising:
a display;
a speaker;
memory storing one or more instructions; and
one or more processors operatively coupled to the display, the speaker, and the memory, and configured to execute the one or more instructions,
wherein the one or more instructions, when executed by the one or more processors, cause the electronic device to:
control the display to display video data including subtitle data in a target language;
obtain context information of an utterer from the video data and audio data corresponding to the video data;
obtain audio track data corresponding to the target language based on the subtitle data and the context information of the utterer; and
control the speaker to output the obtained audio track data.

2. The electronic device of claim 1, wherein the one or more instructions, when executed by the one or more processors, cause the electronic device to input the subtitle data and the context information of the utterer into a trained Artificial Intelligence (AI) model to obtain the audio track data, and
wherein the trained AI model is a Text-to-Speech (TTS) AI model trained to receive text data as an input and convert the text data to speaker adaptive audio data based on the context information of the utterer.

3. The electronic device of claim 2, wherein the trained AI model is configured to:
obtain a characteristic parameter of the utterer based on the context information of the utterer, and
output the audio track data in which the subtitle data is converted to the speaker adaptive audio data based on the characteristic parameter of the utterer.

4. The electronic device of claim 3, wherein the one or more instructions, when executed by the one or more processors, cause the electronic device to identify the characteristic parameter of the utterer based on the context information of the utterer and convert the subtitle data to the speaker adaptive audio data based on the characteristic parameter of the utterer to obtain the audio track data.

5. The electronic device of claim 3, wherein the characteristic parameter of the utterer comprises at least one of a voice type, a voice intonation, a voice pitch, a voice speech speed, or a voice volume, and
wherein the context information of the utterer comprises at least one of gender information, age information, emotion information, character information, or speech volume information of the utterer.

6. The electronic device of claim 4, wherein the one or more instructions, when executed by the one or more processors, cause the electronic device to:
obtain, based on at least one of the video data or the audio data, timing data related to a speech start of the utterer, identification data of the utterer, and emotion data of the utterer, and
identify the characteristic parameter of the utterer based on the timing data, the identification data, and the emotion data.

7. The electronic device of claim 1, wherein the one or more instructions, when executed by the one or more processors, cause the electronic device to:
obtain the subtitle data streaming from a specific data channel, or
obtain the subtitle data through text recognition with respect to frames included in the video data.

8. The electronic device of claim 1, wherein the one or more instructions, when executed by the one or more processors, cause the electronic device to:
separate the audio data corresponding to the video data into background audio data and speech audio data,
obtain the context information of the utterer from the speech audio data, and
control the speaker to mix the audio track data and the background audio data obtained based on the subtitle data and the context information of the utterer, and output the mixed audio track data and background audio data.

9. The electronic device of claim 1, wherein the one or more instructions, when executed by the one or more processors, cause the electronic device to:
based on the video data including a first utterer and a second utterer, obtain first timing data related to a speech start of the first utterer and second timing data related to a speech start of the second utterer,
perform Text-to-Speech (TTS) conversion on first subtitle data corresponding to the first utterer based on the first timing data, first identification data of the first utterer, and first emotion data of the first utterer, to obtain first audio track data corresponding to the first utterer; and
perform TTS conversion on second subtitle data corresponding to the second utterer based on the second timing data, second identification data of the second utterer, and second emotion data of the second utterer, to obtain second audio track data corresponding to the second utterer.

10. A method performed by an electronic device for obtaining an audio track, the method comprising:
displaying, via a display of the electronic device, video data including subtitle data in a target language;
obtaining context information of an utterer from the video data and audio data corresponding to the video data;
obtaining audio track data corresponding to the target language based on the subtitle data and the context information of the utterer; and
outputting, via a speaker of the electronic device, the obtained audio track data.

11. The method of claim 10, wherein the obtaining the audio track data comprises inputting the subtitle data and the context information of the utterer into a trained AI model to obtain the audio track data, and
wherein the trained AI model is a Text-to-Speech (TTS) AI model trained to receive text data as input and convert the text data to speaker adaptive audio data based on the context information of the utterer.

12. The method of claim 11, wherein the trained AI model is configured to:
obtain a characteristic parameter of the utterer based on the context information of the utterer, and
output the audio track data in which the subtitle data is converted to the speaker adaptive audio data based on the characteristic parameter of the utterer.

13. The method of claim 12, wherein the obtaining the audio track data comprises identifying the characteristic parameter of the utterer based on the context information of the utterer and converting the subtitle data to the speaker adaptive audio data based on the characteristic parameter of the utterer to obtain the audio track data.

14. The method of claim 12, wherein the characteristic parameter of the utterer comprises at least one of a voice type, a voice intonation, a voice pitch, a voice speech speed, or a voice volume, and
wherein the context information of the utterer comprises at least one of gender information, age information, emotion information, character information, or speech volume information of the utterer.

15. A non-transitory computer readable medium having instructions stored therein, which when executed by a processor of an electronic device, cause the electronic device to:
display video data including subtitle data in a target language;
obtain context information of an utterer from the video data and audio data corresponding to the video data;
obtain audio track data corresponding to the target language based on the subtitle data and the context information of the utterer; and
output the obtained audio track data.
